Europäisches Patentamt

European Patent Office

Office européen des brevets

(11) Veröffentlichungsnummer: **0 367 332**
**A2**

# (12) EUROPÄISCHE PATENTANMELDUNG

(21) Anmeldenummer: 89202663.4

(22) Anmeldetag: 23.10.89

(51) Int. Cl.⁵: **H04N 9/31**

(30) Priorität: **29.10.88 DE 3836955**

(43) Veröffentlichungstag der Anmeldung:
**09.05.90 Patentblatt 90/19**

(84) Benannte Vertragsstaaten:
**DE FR GB IT NL**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT NL**

(72) Erfinder: **Welker, Thomas, Dr.**
**Offermannstrasse 29a**
**D-5106 Roetgen(DE)**
Erfinder: **Zaengel, Thomas, Dr.**
**Heidchenberg 23**
**D-5100 Aachen(DE)**

(74) Vertreter: **Piegler, Harald, Dipl.-Chem. et al**
**Philips Patentverwaltung GmbH**
**Wendenstrasse 35 Postfach 10 51 49**
**D-2000 Hamburg 1(DE)**

(54) **Farbfernsehprojektionsanordnung.**

(57) Die Erfindung betrifft eine Farbfernsehprojektionsanordnung mit drei flächenartigen monochromatischen Lichtquellen zur Hintergrundbeleuchtung eines Betrachtungsschirms, wobei den Lichtquellen je ein matrixförmiges elektrooptisches Lichtventil (9) zugeordnet ist.

Der Erfindung liegt die Aufgabe zugrunde, eine Farbfernsehprojektionsanordnung mit Lichtquellen zu schaffen, mit denen monochromatische und extrem hohe homogene Leuchtdichten flächenartig erzeugt werden.

Diese Aufgabe wird erfindungsgemäß mit einer Farbfernsehprojektionsanordnung der eingangs genannten Art gelöst, deren Lichtquellen Kathodolumineszenzlichtquellen sind.

Fig.1

EP 0 367 332 A2

## Farbfernsehprojektionsanordnung

Die Erfindung betrifft eine Farbfernsehprojektionsanordnung mit drei flächenartigen monochromatischen Lichtquellen zur Hintergrundbeleuchtung eines Betrachtungsschirms, wobei den Lichtquellen je ein matrixförmiges elektrooptisches Lichtventil zugeordnet ist.

Eine derartige Farbfernsehprojektionsanordnung ist aus GB-A-2 191 057 bekannt, wobei die Lichtquellen z.B. Leuchtstofflampen sind, deren Leuchtstoffe derart gewählt sind, daß die Lampen Licht der jeweils gewünschten Farbe erzeugen, und wobei die Lichtventile z.B. Flüssigkristall-Lichtventile oder elektroskopische Lichtventile sind. Die Leuchtstofflampen können flächenartig ausgebildet sein und im wesentlichen die gleiche Ausdehnung wie die ihnen jeweils zugeordneten Lichtventile haben, um die Lichtventile gleichmäßig zu beleuchten.

Mit Leuchtstofflampen sind für Farbfernsehprojektionsanordnungen ausreichende Helligkeitsdichten prinzipiell nicht erzielbar. Außerdem entsprechen die in Leuchtstofflampen verwendbaren Leuchtstoffe nicht den Spezifikationen für die Farbpunkte der Primärfarben Rot, Grün und Blau und des daraus zu erzeugenden Weißpunktes, wie sie für Farbfernsehprojektionsanordnungen vorgesehen sind ("EBU Standards for Chromaticity Tolerance for Studio Monitors" Tech. 3213-E, Brussels, August 1975). Deshalb werden bei den heute üblichen Farbfernsehprojektionsanordnungen mit Flüssigkristall-Lichtventilen erhebliche Abweichungen der Primärfarbwerte toleriert, was zu starken Farbverfälschungen bei der Bildwiedergabe führt.

Ein weiteres Problem ergibt sich aus der Notwendigkeit, das Licht in einem schmalen Aperturwinkel durch die Lichtventile zu führen. Da bei optischen Abbildungen Apertur x Bild- bzw. Objektgröße eine Konstante ist, läßt sich ein großer Aperturwinkel der Optik vor der Lichtquelle (was gleichbedeutend ist mit einer hohen Ausbeute bei der Lichtkollektion) nur mit Punktlichtquellen verwirklichen.

Eine effiziente Lichtkollektion in dem schmalen nutzbaren Aperturwinkel der Lichtventile erreicht man durch die Kombination von Leuchtstoffschicht und Interferenzfilter, wie für Projektionsfernsehen mit Kathodenstrahlröhren bereits bekannt ist (EP-A-0 170 320, EP-A-0 206 381, EP-A-0 212 715, EP-A-0 246 696), ebenso für Anordnungen mit Lichtquellen, die UV-Strahlung emittieren (EP-A-0 275 601).

Aus DE-A 3 011 296 ist eine Kathodenstrahlröhre bekannt, die einen evakuierten Kolben mit zwei gegenüberliegenden Enden, eine am einen Ende des Kolbens vorgesehene Stirn-bzw. Frontscheibe, eine auf deren Innenfläche aufgetragene monochromatische Leuchtstoffschicht, die selektiv rot, grün oder blau zu leuchten vermag, und eine im Kolben angeordnete Elektronenkanone aufweist, welche der Leuchtstoffschicht gegenüberstehend angeordnet und am anderen Ende des Kolbens gehaltert ist und welche einen ungebündelten Elektronenstrahl erzeugt, der praktisch die gesamte Leuchtstoffschicht bestrahlt, so daß diese über ihre Gesamtfläche hinweg gleichzeitig aufzuleuchten vermag. Derartige Kathodenstrahlröhren werden als Lichtquellen für Großbildwiedergabesysteme, z.B. für Lichtanzeigetafeln in Sportstadien, verwendet. Ein solches System wird aus einer großen Vielzahl von Dreiergruppen aus roten, grünen und blauen Kathodenstrahlröhren gebildet, die in Zeilen und Spalten angeordnet sind und mit denen beliebige Bilder geformt werden können.

Das in DE-A-3 011 296 beschriebene Bildwiedergabesystem arbeitet nach dem Direktsichtprinzip, d.h. der Betrachter schaut direkt auf die angeregte Leuchtstoffschicht. Ferner wird eine Vielzahl von Kathodenstrahlröhren als Lichtquellen verwendet, wobei jede einzelne Lichtquelle einen Bildpunkt repräsentiert. Deshalb sind die Anforderungen an diese Lichtquellen hinsichtlich Helligkeitsdichte, Homogenität der Ausleuchtung und Winkelverteilung der Lumineszenzemission um Größenordnungen geringer als bei Farbfernsehprojektionsanordnungen.

Der Erfindung liegt die Aufgabe zugrunde, eine Farbfernsehprojektionsanordnung mit Lichtquellen zu schaffen, mit denen monochromatische und extrem hohe homogene Leuchtdichten flächenartig erzeugt werden.

Diese Aufgabe wird erfindungsgemäß mit einer Farbfernsehprojektionsanordnung der eingangs genannten Art gelöst, deren Lichtquellen Kathodolumineszenzlichtquellen sind.

Die Erfindung löst die Probleme der Farbreinheit und Effizienz der Lichtkollektion, indem flächenartige Kathodolumineszenzlichtquellen mit geeigneten Primärfarben (Rot, Grün und Blau) direkt vor den Lichtventilen angebracht werden. Die Farbspezifikationen werden durch geeignete Wahl der Leuchtstoffe erfüllt.

Die Lichtventile sind vorzugsweise Dünnfilmtransistor-Flüssigkristall-Lichtventile, doch gelten die oben angeführten Vorzüge der Kathodolumineszenzlichtquellen für alle elektrisch angesteuerten Lichtventile.

Die Kathodolumineszenzlichtquellen weisen je ein Frontsubstrat und je eine Leuchtstoffschicht auf, zwischen denen vorzugsweise je ein Viel-Schichten-Interferenzfilter angeordnet ist, durch die das Licht effizient in einen schmalen Aperturwinkel eingekoppelt wird.

Vorzugsweise ist zwischen dem Frontsubstrat und dem Lichtventil eine Kühlmittelströmung vorgesehen.

2

Ausführungsbeispiele der Erfindung sind in einer Zeichnung dargestellt und werden im folgenden näher beschrieben. In der Zeichnung zeigen

Fig. 1 eine Kathodolumineszenzlichtquelle mit Flutkanone und

Fig. 2 eine Kathodolumineszenzlichtquelle mit Drahtkathoden.

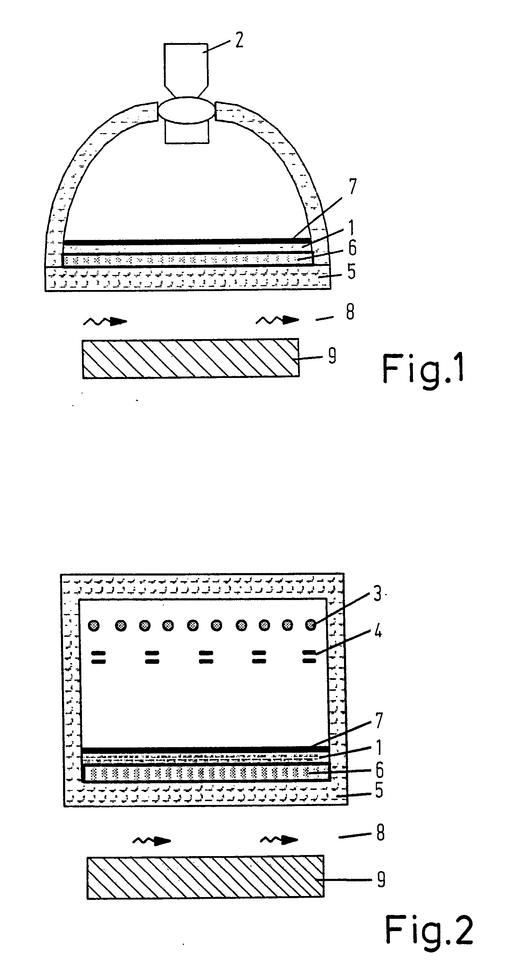

Die flächenartigen Kathodolumineszenzlichtquellen sind, wie die Fig. 1 und 2 zeigen, ähnlich aufgebaut wie Kathodenstrahlröhren, wobei jedoch eine Leuchtstoffschicht 1 nicht von einem Elektronenstrahl abgetastet wird, sondern die gesamte Fläche homogen mit hochenergetischen Elektronen beflutet wird. Als Elektronenquelle dienen eine Flutkanone 2 (Fig. 1) oder dünne parallel gespannte Drahtkathoden 3 (Fig. 2). Im letzteren Fall wird zusätzlich zwischen Kathode 3 und Leuchtstoffschicht 1 ein Gitter 4 angebracht, das zur Homogenisierung der Stromdichte über der gesamten Leuchtstoffschicht, d.h. über den gesamten Leuchtstoffschirm, dient. Der Leuchtstoffschirm ist für beide Typen von Lichtquellen vergleichbar aufgebaut. Auf einem transparenten Frontsubstrat 5, z.B. einer Frontplatte, ist ein Viel-Schichten-$TiO_2$-$SiO_2$-Interferenzfilter 6 angebracht. Darüber liegt die Leuchtstoffschicht 1 (je nach Leuchtstofftyp 20 $\mu$m bis 40 $\mu$m dick). Um elektrische Aufladungen zu vermeiden und das nach innen gehende Licht nach außen zu reflektieren, ist die Leuchtstoffschicht 1 von einem 200 nm dicken Aluminiumfilm 7 bedeckt. Sollen die Lichtquellen bei hoher Belastung betrieben werden, ist eine Kühlung des Frontsubstrates 5 notwendig, was z.B. durch eine laminar gepumpte Wasserströmung 8 zwischen Frontsubstrat und Lichtventil 9 realisiert werden kann. Eine solche Kühlung hat den Vorteil, daß gleichzeitig das Lichtventil mitgekühlt wird, was bei hoher Lichtleistung notwendig wird.

Beispiel 1

Der Aufbau der Kathodolumineszenzlichtquelle ist wie in Fig. 1 schematisch dargestellt. Als transparentes Frontsubstrat 5 dient eine 10 cm² große und 2,5 mm dicke Glasplatte. Für die rote, grüne und blaue Lichtquelle wurden die Leuchtstoffe $Y_2O_3$:Eu, (Zn,Cd)S:Cu,Al und ZnS:Ag ausgewählt. Die Interferenzfilter 6 müssen dem jeweiligen Emissionsspektrum der Leuchtstoffe angepaßt werden. Diese Lichtquellen können bei Verwendung von Wasserkühlung mit 30 kV Beschleunigungsspannung und 2,4 mA Gesamtstrom im Dauerstrich betrieben werden. Die Farbpunkte (x,y) und Lumenflüsse F (letztere gemessen in einem 15 Grad Aperturwinkel) sind in folgender Tabelle angegeben:

|  | x | y | F (in lm) |
|---|---|---|---|
| rot | 0,649 | 0,346 | 147 |
| grün | 0,297 | 0,649 | 602 |
| blau | 0,145 | 0,045 | 41 |

Bei Verwendung dieser Lichtquellen wird unter Berücksichtigung der Transmissionsverluste in den Lichtventilen 9 in den dichroiden Prismen zur Farbzusammenführung und in der Projektionsoptik am Ausgangsschirm ein Lumenfluß (für weiß) von 178 lm erreicht. In diesem Fall ist die elektrische Gesamtleistung für alle drei Lichtquellen zusammen 160 W.

Beispiel 2

Die drei Lichtquellen sind identisch zum Beispiel 1 aufgebaut. Nur wurden die Glasfrontplatten durch 18 cm² Quarzglasplatten mit einer Dicke von 1 mm ersetzt. Dadurch ist eine mehr als doppelt so hohe Energiebelastung der Leuchtstoffschichten möglich. Diese Lichtquellen können im Dauerstrich bei 30 kV Beschleunigungsspannung mit 5,4 mA betrieben werden. In einem Aperturwinkel von 15 Grad erreicht man folgende Lumenflüsse F:

rot 276 lm, grün 1123 lm, blau 77 lm.

Mit diesen Lichtquellen wird ein Lumenfluß (für weiß) am Ausgangsschirm von 331 lm erreicht, wobei die gesamte elektrische Leistung 360 W beträgt.

**Ansprüche**

3

1. Farbfernsehprojektionsanordnung mit drei flächenartigen monochromatischen Lichtquellen zur Hintergrundbeleuchtung eines Betrachtungsschirms, wobei den Lichtquellen je ein matrixförmiges elektrooptisches Lichtventil zugeordnet ist,
dadurch gekennzeichnet,
daß die Lichtquellen Kathodolumineszenzlichtquellen sind.

2. Farbfernsehprojektionsanordnung nach Anspruch 1,
dadurch gekennzeichnet,
daß die Lichtventile Dünnfilmtransistor-Flüssigkristall-Lichtventile (9) sind.

3. Farbfernsehprojektionsanordnung nach Anspruch 1 oder 2,
dadurch gekennzeichnet,
daß die Kathodolumineszenzlichtquellen je ein Frontsubstrat (5) und je eine Leuchtstoffschicht (1) aufweisen, zwischen denen je ein Viel-Schichten-Interferenzfilter (6) angeordnet ist.

4. Farbfernsehprojektionsanordnung nach Anspruch 1 oder 3,
dadurch gekennzeichnet,
daß zwischen dem Frontsubstrat (5) und dem Lichtventil (9) eine Kühlmittelströmung (8) vorgesehen ist.

Fig.1

Fig.2

PHD 88-224